# EUROPEAN PATENT APPLICATION

(11) **EP 1 302 354 A1**
(43) Date of publication of application: **16.04.2003**
(21) Application number: 01308725.9
(22) Date of filing: 12.10.2001
(51) Int. Cl.: B60K 15/077, F02M 37/02

(54) **A fuel delivery system**

(71) Applicant: Visteon Global Technologies, Inc., Dearborn, Michigan 48126-2490 (US)
(72) Inventor: Tyler, Roy David, Canvey Island Essex SS8 7DA (GB)
(74) Representative: McLean, Robert Andreas

(57) **Abstract**

A fuel delivery system (1) for an internal combustion engine. The fuel delivery system (1) has a fuel tank (2) including at least two chambers (4,6) for containing fuel. A fuel delivery module (10) is located in each of the two chambers (4,6) and each fuel delivery module (10) includes a reservoir (12) for containing fuel. A fuel pump (14) located within said reservoir (12) supplies fuel to the internal combustion engine. The fuel delivery modules (10) have an inlet for allowing fuel to enter and a first jet pump (16) for drawing fuel through the inlet and supplying fuel to the reservoir. Each fuel delivery module also includes means (28) for supplying fuel from one chamber (4,6) to a different chamber (6,4) of the fuel tank (2).

## Description

The present invention relates to a fuel delivery system including a fuel tank with two or more chambers for containing fuel. The invention is of especial relevance to fuel delivery systems having a high fuel throughput, for instance fuel delivery systems for high powered internal combustion engines.

Vehicle designers often have to cope with limited space in which to locate fuel delivery system components, particularly a fuel tank. As a result, the fuel tank may be shaped to fit around nearby vehicle components, such as driveshafts, differential gears, or exhaust systems. A common fuel tank design achieving the required fit around nearby components is referred to as a "saddle tank". A "saddle tank" has two reservoir chambers that are connected by a conduit in an upper portion. The "saddle tank" straddles a vehicle component with the chambers on either side and with the conduit above it. A primary chamber of the fuel tank usually contains a fuel pump for supplying fuel to the engine. Due to the shape of the fuel tank, fuel from a secondary chamber will not normally flow under gravity into the primary chamber. This results in inefficient use of the storage capacity of the fuel tank as the primary chamber may be empty with no fuel for the fuel pump and the secondary chamber may still contain some fuel.

The patent document US 5,732,684 discloses a fuel delivery system for an internal combustion engine, the fuel delivery system including a fuel tank having several chambers. A primary fuel pump is located in a fuel delivery module in one chamber and feeds high pressure fuel to the engine. An auxiliary pump is used to draw fuel from a secondary chamber and feed it at low pressure into the primary chamber.

A further problem with a fuel delivery system for a vehicle including a fuel tank having many chambers is that of adequate fuel supply during arduous use. For instance during off-road use when the vehicle may be inclined, during rapid acceleration, deceleration or cornering or the use of a high power engine requiring a high flowrate of high pressure fuel, the distribution of fuel within the fuel tank may be difficult to regulate. With poor distribution of fuel within the fuel tank, there may be fuel in one or more chambers, but no fuel in the primary chamber for the fuel pump to supply to the engine.

It is an object of the present invention to address some of the above issues.

According to the invention there is provided a fuel delivery system for an internal combustion engine, the fuel delivery system comprising a fuel tank having at least two chambers for containing fuel, a fuel delivery module located in each of the two chambers, each fuel delivery module comprising a reservoir for containing fuel, a fuel pump located within said reservoir to supply fuel to the internal combustion engine, an inlet for allowing fuel into the fuel delivery module, a first jet pump for drawing fuel through the inlet and supplying fuel to the reservoir, each fuel delivery module further comprising means for supplying fuel from one chamber to a different chamber of the fuel tank.

Passing fuel between chambers in a fuel tank ensures that a fuel pump in either chamber has at least some fuel which may be supplied to the engine.

The means for supplying fuel to a different chamber of the fuel tank is preferably a second jet pump located within the fuel delivery module. However, the means may be an additional fuel supply line taken from the output of the fuel pump or first jet pump and directed into a different chamber. It should be understood that there could be more than two chambers and that there may be a fuel delivery module in some or all of the chambers.

The fuel supplied to a different chamber may be fed into a chamber of the fuel tank, but is preferably fed directly into the reservoir of a fuel delivery module within said chamber. Supplying the fuel directly into a reservoir of a fuel module ensures that if there is fuel within the fuel tank, there is fuel that may be supplied to the engine by the fuel pump in the reservoir. There would be fuel in the reservoir even when the fuel level in the surrounding chamber would be too low for effective supply to the reservoir by the first jet pump.

In the fuel delivery system according to the present invention there are at least two fuel pumps for supplying fuel to the engine. Each fuel pump may supply different portions of the engine. For instance an internal combustion engine may have two banks of cylinders and one fuel pump may supply fuel to one bank of cylinders and the other fuel pump may supply fuel to the other bank of the cylinders. The use of two pumps to supply different regions of the engine may improve the response of the fuel supply system to transient operating conditions.

The fuel output from the two fuel pumps may be combined to feed a single fuel rail for supplying fuel to the engine. The combining of the two fuel supplies may occur at or adjacent to an accumulator as this may reduce pressure losses that occur when the outputs from two pumps are combined. Accumulators of this type often include a vent and this may require a connection to a vent system for the fuel tank. The combining of the fuel feeds removes the need for multiple fuel rails and pressure sensors.

It should be understood that for some applications an accumulator may not be included in a fuel delivery system in which the outputs from two fuel pumps are combined. The pressure in the fuel rail may be controlled by a pulse width modulated signal, which turns the fuel pump on and off to maintain the correct pressure.

Preferably the fuel supply to the jet pumps in a fuel delivery module is supplied by the fuel pump housed within said fuel delivery module. The fuel supply to the jet pumps may be supplied wholly or in part by a fuel recirculation circuit forming part of the fuel delivery system.

Preferably the fuel delivery module has a one way valve, preferably a flap valve, through a surface in a lower quarter of the reservoir and preferably through a bottom surface of the reservoir when it is orientated for use. This allows the reservoir to fill with fuel when the fuel tank is filled.

Some fuel delivery systems, particularly those for supplying a high powered engine, may be required to supply over about 0.2 m³/hr of fuel to the engine at a pressure of about 5 bar. A single pump may not be able to meet this demand and the use fuel delivery modules that do not supply fuel to one another may result in one chamber becoming empty and a fuel pump therein not having fuel to supply to the engine. The use of two fuel delivery modules that supply fuel to each other, either directly into the reservoir or into the surrounding chamber, permits reliable high volume fuel supply to the engine.

The invention will now be further described, by way of example, with reference to the accompanying drawings, in which:
Figure 1 is a schematic drawing of a fuel delivery system according to the invention; and
Figure 2 is a cross section through a fuel delivery module suitable for use with the invention.

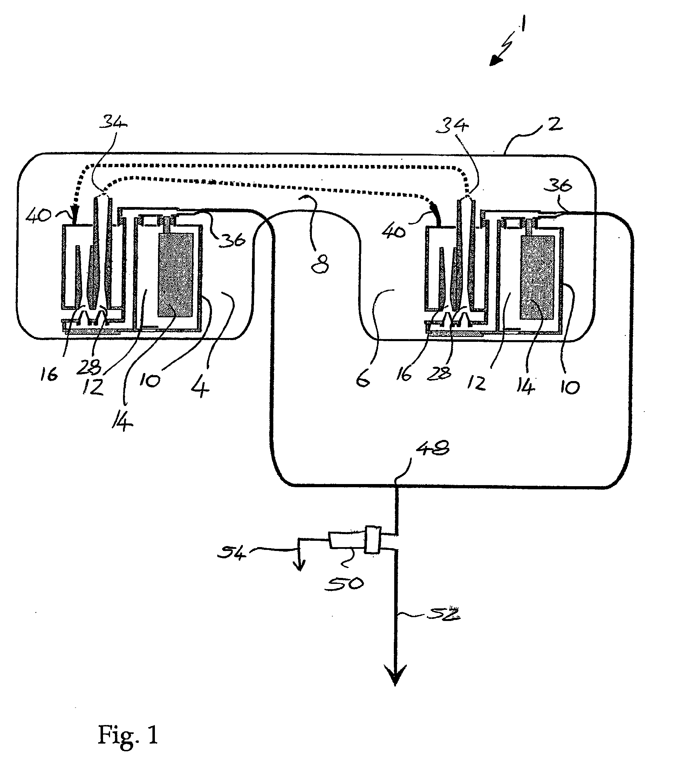

Figure 1 shows a fuel delivery system 1 comprising a saddle fuel tank 2 having a first chamber 4, and a second chamber 6 for containing fuel. A conduit 8 links the chambers 4,6 so fuel may move between the chambers 4,6. Within each chamber is a fuel delivery module 10.

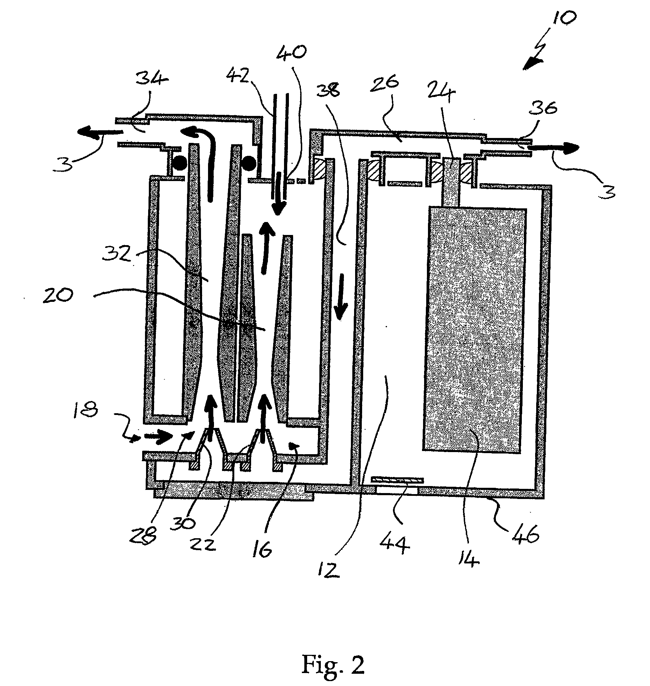

The fuel delivery module 10 will be described in more detail with reference to Figure 2.

The fuel delivery module 10 comprises a reservoir 12 within which there is located a fuel pump 14. Arrows 3 are used to indicate the fuel flow path through the module 10. A first jet pump 16 within the fuel delivery module 10 draws fuel into the module 10 through an inlet 18 and supplies the fuel to the reservoir 12. The first jet pump 16 comprises a jet nozzle 22 and a venturi tube 20. Fuel passes through the jet nozzle 22 and venturi tube 20 into the reservoir 12. Fuel is drawn from the inlet 18 through the venturi tube 20 and into the reservoir 12 due to the pressure drop caused by the fluid from the jet nozzle 22 passing through the venturi tube 20.

A second jet pump 28 is also located within the fuel delivery module 10. The second jet pump 28 comprises a jet nozzle 30 and a venturi tube 32 and works in the same way as the first jet pump 16. The output from the venturi tube 32 of the second jet pump 28 passes into a low pressure fuel line 34.

The fuel pump has an outlet 24 through which fuel is supplied at high pressure. The outlet passes into a manifold 26 from which a high pressure fuel line 36 carries fuel to supply the engine and a conduit 38 supplies fuel to the nozzles 22,30 of the first and second jet pumps 16,28.

The fuel delivery module 10 includes a reservoir inlet 40 into the reservoir 12. A low pressure fuel line 42 passes through the reservoir inlet 40 to supply fuel directly to the reservoir 12.

A flap valve 44 is located in a bottom surface 46 of the reservoir 12 to allow fuel to enter the reservoir 12 as the fuel tank 2 is filled.

Referring now to Figure 1, the fuel line 34 carrying fuel from the second jet pump 28 of the fuel delivery module in the first chamber 4 is connected to the fuel line 42 passing into the reservoir 12 of the fuel delivery module 10 in the second chamber 6 and vice-versa. This means that fuel is always being transferred between the chambers 4,6 and that the reservoirs 12 of the fuel delivery modules 10 always contain fuel if there is fuel in at least one of the chambers 4,6.

In Figure 1, both the fuel lines 36 supplying fuel to the engine join 48 and are then fed into an accumulator 50. The fuel line 52 from the accumulator supplies fuel to the engine. The accumulator has a vent line 54 that is connected to a vent system (not shown) for the fuel tank 2. It should be understood that the fuel lines 36 may not be joined and may be used to feed fuel to different parts of the engine.

The present invention has been described above purely by way of example. It should be noted that modifications in detail may be made within the scope of the invention as defined in the claims.

## Claims

1. A fuel delivery system (1) for an internal combustion engine, the fuel delivery system (1) comprising a fuel tank (2) having at least two chambers (4,6) for containing fuel, a fuel delivery module (10) located in each of the two chambers (4,6), each fuel delivery module (10) comprising a reservoir (12) for containing fuel, a fuel pump (14) located within said reservoir (12) to supply fuel to the internal combustion engine, an inlet (18) for allowing fuel into the fuel delivery module (10), a first jet pump (16) for drawing fuel through the inlet (18) and supplying fuel to the reservoir (12), each fuel delivery module (10) further comprising means (28) for supplying fuel from one chamber (4,6) to a different chamber (6,4) of the fuel tank (2).

2. A fuel delivery system (1) as claimed in claim 1, in which the means for supplying fuel to a different chamber (6,4) is a second jet pump (28).

3. A fuel delivery system as claimed in claim 1 or claim 2, in which the fuel supplied to a different chamber (6,4) of the fuel tank is supplied directly into a reservoir (12) of a fuel delivery module located within said chamber.

4. A fuel delivery system as claimed in any preceding claim, in which the fuel supplied to a jet pump (16) within a fuel delivery module (10) is from the fuel pump (14) within said module (10).

5. A fuel delivery system as claimed in any preceding claim, in which the fuel leaving the fuel delivery modules to supply the internal combustion engine is combined into a single fuel feed line (52) prior to supply to the engine.

6. A fuel delivery system as claimed in claim 4, in which the fuel supplies are combined at or adjacent to an accumulator (50).

7. A fuel delivery system as claimed in any preceding claim, in which the fuel delivery module includes a one-way valve (44) through a surface (46) in a lower quarter of the reservoir (12).

8. A fuel delivery module (10) for use in a fuel delivery system as claimed in claim 1, the fuel delivery module (10) comprising a reservoir (12) for containing fuel, a fuel pump (14) located within said reservoir (12) to supply fuel to the internal combustion engine, an inlet (18) for allowing fuel into the fuel delivery module (10), a first jet pump (16) for drawing fuel through the inlet (18) and supplying fuel to the reservoir (12), each fuel delivery module (10) further comprising means (28) for supplying fuel to a remote second fuel delivery module (10).

9. A fuel delivery system (1) for delivering fuel to an internal combustion engine from a fuel tank (2) having at least two chambers (4,6) for containing fuel, the system comprising a fuel delivery modules (10) to be located in each of the two chambers (4,6), each fuel delivery module (10) comprising a reservoir (12) for containing fuel, a fuel pump (14) located within said reservoir (12) to supply fuel to the internal combustion engine, an inlet (18) for allowing fuel from a respective chamber into the fuel delivery module (10), a first jet pump (16) for drawing fuel through the inlet (18) and supplying fuel to the reservoir (12), each fuel delivery module (10) further comprising means (28) for supplying fuel from one chamber (4,6) to a different chamber (6,4) of the fuel tank (2).

10. A vehicle equipped with a fuel delivery system as claimed in claim 1.
